# EUROPEAN PATENT SPECIFICATION

(11) **EP 4 393 725 B1**
(45) Date of publication and mention of the grant of the patent: **31.12.2025**
(21) Application number: 23213440.3
(22) Date of filing: 30.11.2023
(51) Int. Cl.: B60C 11/03, B60C 11/12

(54) **TIRE**
REIFEN
PNEUMATIQUE

(30) Priority: 27.12.2022 JP 2022209932
(43) Date of publication of application: 03.07.2024
(73) Proprietor: Sumitomo Rubber Industries, Ltd., Kobe-shi, Hyogo 651-0072 (JP)
(72) Inventor: ISHIBASHI, Kenta, Kobe-shi, 651-0072 (JP)
(74) Representative: Manitz Finsterwald Patent- und Rechtsanwaltspartnerschaft mbB

(56) References cited:
- EP-A1- 1 157 859
- EP-A1- 2 862 729
- WO-A1-2022/050287

## Description

### BACKGROUND OF THE INVENTION

### Field of the Invention

The present invention relates to a tire.

### Background Art

Japanese Laid-Open Patent Publication No. 2021-195051 proposes a tire intended to be used in winter. An outer shoulder land portion of the tire is divided into a plurality of outer shoulder blocks by a plurality of outer shoulder axial grooves extending in a tire axial direction. At least one of the outer shoulder blocks is divided into a first block piece on an outer tread end side and a second block piece on an inner tread end side by a first circumferential narrow groove extending in a tire circumferential direction. The first block piece is provided with a plurality of first sipes, and the second block piece is provided with a plurality of second sipes. The total number of the second sipes of the second block piece is larger than the total number of the first sipes of the first block piece.

In recent years, tires having excellent performances on ice and snow are required in association with improvement in the performances of vehicles. Meanwhile, the tires are also required to maintain steering stability on a dry road surface.

State of the art tires can for example be found in WO 2022/050287 A1, EP 1157859 A1 and EP 2862729 A1.

WO2022050287 A1 discloses a tire comprising a tread portion which includes a land portion. Multiple closed sipes are arranged in a tire axial direction in the land portion. Each of the closed sipes includes a first end and a second end. A first sipe element extends from the first end side in the tire axial direction. A second sipe element extends from the second end side in the tire axial direction. A third sipe element is inclined with respect to the tire axial direction between the first sipe element and the second sipe element. The closed sipes arranged in the tire axial direction overlap each other in the tire axial direction.

EP1157859 A1 discloses the tread of vehicle tire which has surface tear points provided between adjacent slits, and webs are formed between ends of respective slits and between the bends of the slits. The web width is five times the width of the slit. The adjacent slits and associated webs restrict internal nubs inside the pattern blocks.

EP2862729 A1 discloses a pneumatic tire with tread pattern, wherein the tread elements comprise a plurality of sipes arranged side by side in a sequence extending in the lateral direction. The sipes are made up by straight legs connected in zig-zag manner and arranged such that the respective first and last leg of adjacent sipes are parallel.

The present invention has been made in view of the above circumstances, and a main object of the present invention is to provide a tire that can exhibit excellent performance on ice and snow while maintaining steering stability on a dry road surface.

### SUMMARY OF THE INVENTION

The present invention is directed to a tire having a tread portion, the tread portion including: a first tread end and a second tread end; a plurality of circumferential grooves, between the first tread end and the second tread end, continuously extending in a tire circumferential direction; and a plurality of land portions delimited by the plurality of circumferential grooves, wherein the plurality of circumferential grooves include a first shoulder circumferential groove located so as to be closest to the first tread end, the plurality of land portions include a first shoulder land portion including the first tread end and a first middle land portion adjacent to the first shoulder land portion with the first shoulder circumferential groove interposed therebetween, the first shoulder land portion is provided with a plurality of shoulder sipes extending in a tire axial direction in a zigzag manner, each of the plurality of shoulder sipes has a length not less than 60% of a width in the tire axial direction of the first shoulder land portion, i.e. in a case where two or more shoulder sipes are arranged in the tire axial direction, the total of the length in the tire axial direction of one of the shoulder sipes and the length in the tire axial direction of the other shoulder sipe(s) is not less than 60% of the width of the first shoulder land portion, the first middle land portion is provided with a plurality of middle sipe groups arranged in the tire circumferential direction, and each of the middle sipe groups is formed such that a plurality of closed sipes thereof overlap with each other in both the tire axial direction and the tire circumferential direction, and wherein the first shoulder land portion includes a plurality of shoulder blocks delimited by a plurality of shoulder axial grooves extending from the first shoulder circumferential groove (5) to at least the first tread end, and each of the plurality of shoulder blocks (23) is provided with at least one circumferential sipe connecting corresponding ones of the plurality of shoulder axial grooves to each other.

Since the tire according to the present invention has the above configuration, the tire can exhibit excellent performance on ice and snow while maintaining steering stability on a dry road surface.

### BRIEF DESCRIPTION OF THE DRAWINGS

FIG. 1 is a development of a tread portion of a tire according to an embodiment of the present invention;
FIG. 2 is an enlarged view of a first shoulder land portion and a first middle land portion in FIG. 1;
FIG. 3 is an enlarged view of a shoulder block in FIG. 2;
FIG. 4 is an enlarged view of a middle block in FIG. 2;
FIG. 5 is an enlarged view of a first outer shoulder sipe in FIG. 3;
FIG. 6 is an enlarged view of a second middle sipe in FIG. 4;
FIG. 7 is an enlarged view of a crown land portion in FIG. 1; and
FIG. 8 is an enlarged perspective view of a crown axial groove in FIG. 7.

### DETAILED DESCRIPTION

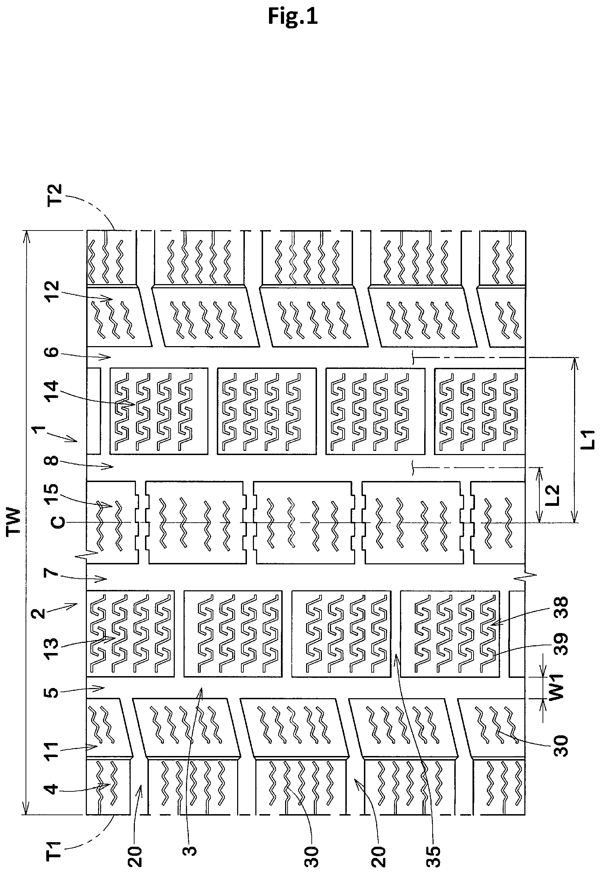

Hereinafter, an embodiment of the present invention will be described with reference to the drawings. FIG. 1 is a development of a tread portion 2 of a tire 1 according to the embodiment of the present invention. The tire 1 according to the present embodiment is suitably used as, for example, a pneumatic tire for a passenger car for use in winter. However, the mode of the present invention is not limited thereto.

As shown in FIG. 1, the tread portion 2 includes: a first tread end T1 and a second tread end T2; a plurality of circumferential grooves 3, between the first tread end T1 and the second tread end T2, continuously extending in a tire circumferential direction; and a plurality of land portions 4 delimited by the plurality of circumferential grooves.

Each of the first tread end T1 and the second tread end T2 corresponds to an end, of a ground-contact surface, obtained when: 70% of a standardized load is applied to the tire 1 in a standardized state; and the tread portion 2 is brought into contact with a flat surface at a camber angle of 0°.

In the case of a pneumatic tire for which various standards are defined, the "standardized state" is a state where: the tire is mounted on a standardized rim and inflated to a standardized internal pressure; and no load is applied to the tire. In the case of a non-pneumatic tire or a tire for which various standards are not defined, the standardized state means a standard use state, serving the purpose of use of the tire, where no load is applied to the tire. In the present specification, dimensions and the like of constituents of the tire are values measured in the standardized state, unless otherwise specified.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

In the case of a pneumatic tire for which various standards are defined, the "standardized load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. Meanwhile, in the case of a tire for which various standards are not defined, the "standardized load" refers to the maximum load applicable when the tire is used, according to the above standards.

The plurality of circumferential grooves 3 include at least a first shoulder circumferential groove 5. In addition to this, the plurality of circumferential grooves 3 in the present embodiment include a second shoulder circumferential groove 6, a first crown circumferential groove 7, and a second crown circumferential groove 8.

The first shoulder circumferential groove 5 is a circumferential groove 3 that is located so as to be closest to the first tread end T1 among the plurality of circumferential grooves 3. The second shoulder circumferential groove 6 is a circumferential groove 3 that is located so as to be closest to the second tread end T2 among the plurality of circumferential grooves 3. The first crown circumferential groove 7 is located between the first shoulder circumferential groove 5 and a tire equator C. The second crown circumferential groove 8 is located between the second shoulder circumferential groove 6 and the tire equator C.

A distance L1 in a tire axial direction from the groove center line of the first shoulder circumferential groove 5 or the groove center line of the second shoulder circumferential groove 6 to the tire equator C is, for example, 25% to 35% of a tread width TW. A distance L2 in the tire axial direction from the groove center line of the first crown circumferential groove 7 or the groove center line of the second crown circumferential groove 8 to the tire equator C is, for example, 5% to 15% of the tread width TW. However, the mode of the present invention is not limited thereto. Here, the tread width TW is a distance in the tire axial direction from the first tread end T1 to the second tread end T2 in the standardized state.

Each of the circumferential grooves 3 linearly extends so as to be parallel to the tire circumferential direction, for example. Each of the circumferential grooves 3 may extend in the tire circumferential direction in a zigzag or wavy manner.

A groove width W1 of the circumferential groove 3 is not less than 3.0 mm and is, for example, 3.0% to 5.0% of the tread width TW. The depth (not shown) of the circumferential groove 3 is, for example, 5.0 to 15.0 mm. However, the mode of the circumferential groove 3 is not limited thereto.

The plurality of land portions 4 include at least a first shoulder land portion 11 and a first middle land portion 13. The first shoulder land portion 11 includes the first tread end T1. The first middle land portion 13 is delimited between the first shoulder circumferential groove 5 and the first crown circumferential groove 7. Thus, the first middle land portion 13 is adjacent to the first shoulder land portion 11 with the first shoulder circumferential groove 5 interposed therebetween.

The plurality of land portions 4 in the present embodiment further include a second shoulder land portion 12, a second middle land portion 14, and a crown land portion 15. The second shoulder land portion 12 includes the second tread end T2. The second middle land portion 14 is delimited between the second shoulder circumferential groove 6 and the second crown circumferential groove 8. Thus, the second middle land portion 14 is adjacent to the second shoulder land portion 12 with the second shoulder circumferential groove 6 interposed therebetween. The crown land portion 15 is delimited between the first crown circumferential groove 7 and the second crown circumferential groove 8. Thus, the crown land portion 15 is adjacent to the first middle land portion 13 with the first crown circumferential groove 7 interposed therebetween. The configuration of the first shoulder land portion 11 described below is applicable to the second shoulder land portion 12. Likewise, the configuration of the first middle land portion 13 described below is applicable to the second middle land portion 14.

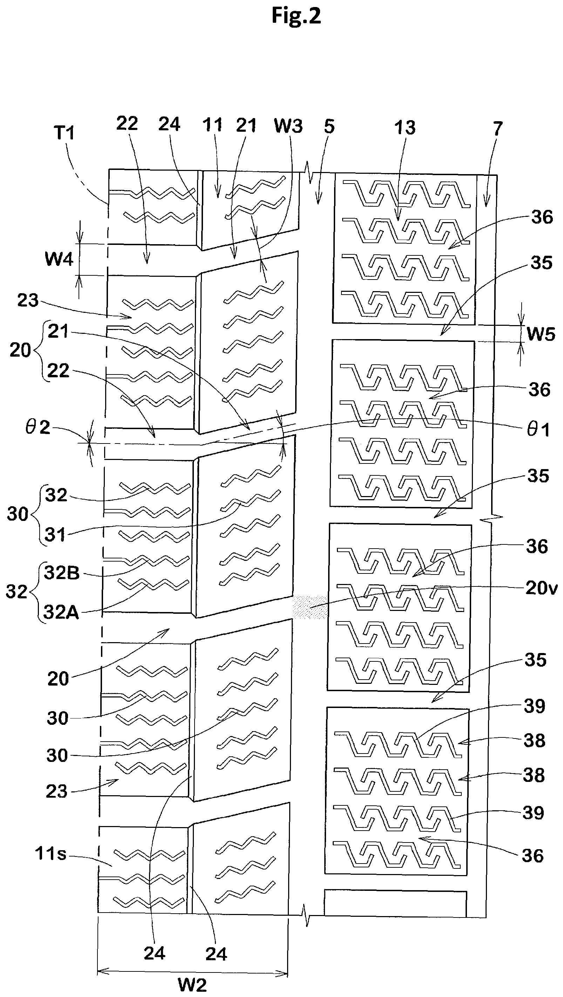

FIG. 2 is an enlarged view of the first shoulder land portion 11 and the first middle land portion 13. As shown in FIG. 2, the first shoulder land portion 11 is provided with a plurality of shoulder sipes 30 extending in the tire axial direction in a zigzag manner. A desirable mode is such that the first shoulder land portion 11 in the present embodiment includes a plurality of shoulder blocks 23 delimited by a plurality of shoulder axial grooves 20 extending from the first shoulder circumferential groove 5 to at least the first tread end T1. Each of the shoulder blocks 23 is provided with corresponding ones of the plurality of shoulder sipes 30.

In the present specification, the "sipe" is a slit having a small width and having a width of not greater than 1.5 mm between two inner walls facing each other. The width of the sipe is desirably 0.3 to 1.2 mm and more desirably 0.5 to 1.0 mm. The sipe in the present embodiment is formed so as to have a fixed width over the overall depth thereof, and the width is set to fall within the above range. However, without limitation to such a mode, the opening of the sipe may be provided with a chamfered portion. Further, the sipe may have a so-called flask bottom at which the width has been partially increased.

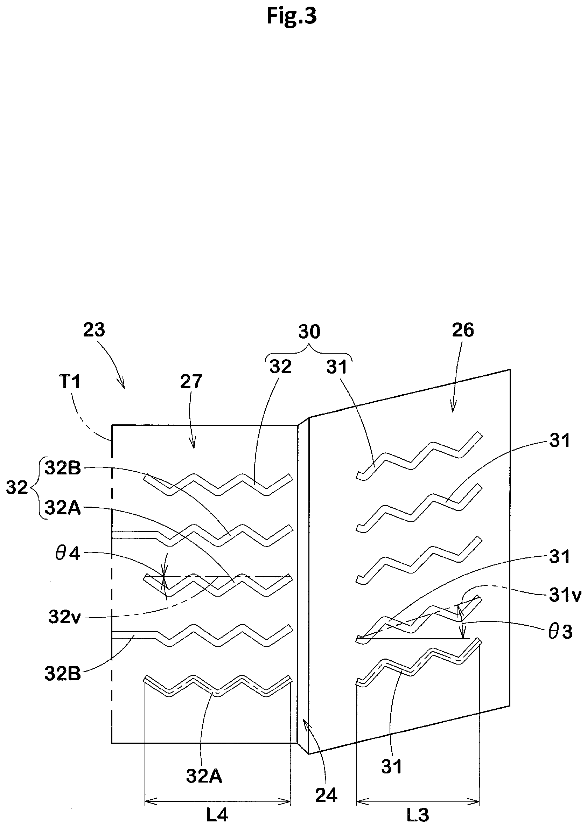

FIG. 3 is an enlarged view of one of the shoulder blocks 23. In the present invention, each of the plurality of shoulder sipes 30 has a length that is not less than 60% of a width W2 (shown in FIG. 2; the same applies below) in the tire axial direction of a tread surface 11s of the first shoulder land portion 11. This configuration means that, in a case where two shoulder sipes 30 are arranged in the tire axial direction as in the present embodiment, the total of the length in the tire axial direction of one of the shoulder sipes 30 and the length in the tire axial direction of the other shoulder sipe 30 is not less than 60% of the width W2 of the first shoulder land portion 11. The same applies to a case where three or more shoulder sipes 30 are arranged in the tire axial direction.

As shown in FIG. 2, the first middle land portion 13 in the present invention is provided with a plurality of middle sipe groups 38 arranged in the tire circumferential direction. Each of the middle sipe groups 38 is formed such that a plurality of closed sipes 39 thereof overlap with each other in both the tire axial direction and the tire circumferential direction. Here, each of the closed sipes 39 means a sipe having both ends terminating within the tread surface of the land portion. A desirable mode is such that: the first middle land portion 13 in the present embodiment includes a plurality of middle blocks 36 delimited by a plurality of middle axial grooves 35 completely crossing the first middle land portion 13 in the tire axial direction; and each of the middle blocks 36 is provided with corresponding ones of the plurality of middle sipe groups 38.

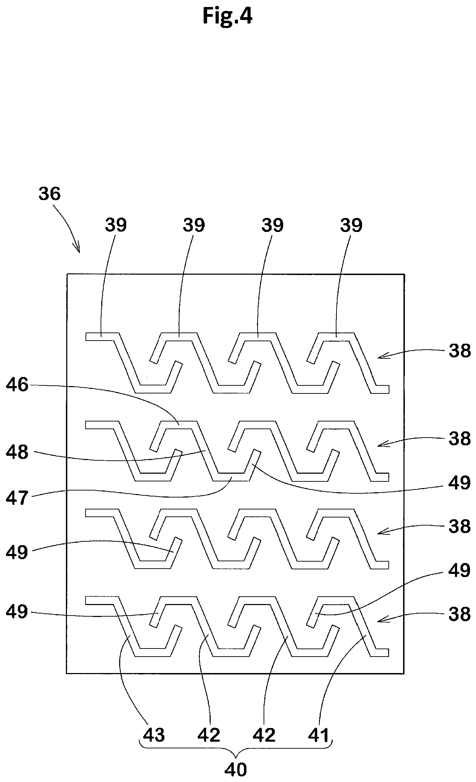

FIG. 4 is an enlarged view of one of the middle blocks 36. As shown in FIG. 4, the feature in which the "plurality of closed sipes 39 overlap with each other in the tire axial direction" in the above configuration means that, when two of the closed sipes 39 arranged in the tire axial direction are observed in a plan view of the tread, an imaginary region obtained by extending one of the closed sipes 39 parallelly to the tire circumferential direction overlaps with at least a part of the other closed sipe 39, with this positional relationship being established for every two of the plurality of closed sipes 39 arranged in the tire axial direction.

Likewise, the feature in which the "plurality of closed sipes 39 overlap with each other in the tire circumferential direction" in the above configuration means that, when two of the closed sipes 39 arranged in the tire axial direction are observed in the plan view of the tread, an imaginary region obtained by extending one of the closed sipes 39 parallelly to the tire axial direction overlaps with at least a part of the other closed sipe 39, with this positional relationship being established for every two of the plurality of closed sipes 39 arranged in the tire axial direction.

Since the tire 1 according to the present invention has the above configuration, the tire 1 can exhibit excellent performance on ice and snow while maintaining steering stability on a dry road surface (hereinafter, sometimes simply referred to as "steering stability"). The reasons for this are as follows.

Sipes and grooves provided in a shoulder land portion tend to be highly contributive to performance on ice and snow. Considering this tendency, as shown in FIG. 2, the first shoulder land portion 11 in the present invention is provided with the plurality of shoulder sipes 30 extending in the tire axial direction in a zigzag manner, and each of the plurality of shoulder sipes 30 has a length that is not less than 60% of the width W2 in the tire axial direction of the tread surface 11s of the first shoulder land portion 11. Such shoulder sipes 30 are such that, on an ice/snow road surface, large frictional force is exerted, and meanwhile, upon application of a ground-contact pressure, sipe walls facing each other are engaged with each other so that the rigidity of the first shoulder land portion 11 (especially, the rigidity thereof in the tire axial direction) can be maintained, and hence, the steering stability on a dry road surface can be maintained.

Meanwhile, the steering stability on a dry road surface is largely influenced by a middle land portion to which a comparatively high ground-contact pressure is applied. Considering this, the first middle land portion 13 in the present invention is provided with the plurality of middle sipe groups 38 arranged in the tire circumferential direction, and each of the middle sipe groups 38 is formed such that the plurality of closed sipes 39 thereof overlap with each other in both the tire axial direction and the tire circumferential direction. Such middle sipe groups 38 especially serve to maintain the rigidity in the tire circumferential direction of the first middle land portion 13. Consequently, the first middle land portion 13 can reinforce the rigidity, in the tire circumferential direction, that would tend to become insufficient with only the above configuration of the first shoulder land portion 11. That is, in the present invention, owing to the first shoulder land portion 11 and the first middle land portion 13, high rigidities can be expected to be obtained in the tire circumferential direction and the tire axial direction, and excellent steering stability is exhibited. In addition, the middle sipe groups 38 enable frictional force to be exerted in both the tire circumferential direction and the tire axial direction on an ice/snow road, whereby the performance on ice and snow can be effectively improved. For these reasons, the tire 1 according to the present invention can exhibit excellent performance on ice and snow while maintaining steering stability on a dry road surface.

Hereinafter, more detailed configurations of the present embodiment will be described. The configurations described below indicate specific modes of the present embodiment. Therefore, it is needless to say that the present invention can achieve the above effects even when the configurations described below are not provided. In addition, even when any one of the configurations described below is independently applied to the tire according to the present invention having the above features, performance improvement based on said configuration can be expected. Furthermore, when some of the configurations described below are applied in combination, complex performance improvement based on said configurations can be expected.

Each of the shoulder axial grooves 20 includes an inner groove portion 21 and an outer groove portion 22. The inner groove portion 21 is in communication with the first shoulder circumferential groove 5 and extends so as to have a fixed groove width W3. The outer groove portion 22 is in communication with the outer side in the tire axial direction of the inner groove portion 21 and extends to at least the first tread end T1. The outer groove portion 22 extends in the tire axial direction so as to have a fixed groove width W4. The groove width W4 of the outer groove portion 22 is larger than the groove width W3 of the inner groove portion 21. Specifically, the groove width W4 is 130% to 150% of the groove width W3. Such a shoulder axial groove 20 including the inner groove portion 21 and the outer groove portion 22 can suppress uneven wear of the first shoulder land portion 11 at and around a portion that is in communication with the first shoulder circumferential groove 5.

An angle θ1 of the inner groove portion 21 with respect to the tire axial direction is, for example, 10 to 20°. An angle θ2 of the outer groove portion 22 with respect to the tire axial direction is desirably smaller than the angle θ1 of the inner groove portion 21 with respect to the tire axial direction. Specifically, the angle θ2 of the outer groove portion 22 is, for example, not greater than 10° and desirably not greater than 5°. Such an inner groove portion 21 and such an outer groove portion 22 enable frictional force to be exerted in the tire axial direction and the tire circumferential direction in a balanced manner on an ice/snow road surface.

Each of the plurality of shoulder blocks 23 is provided with at least one circumferential sipe 24. The circumferential sipe 24 is formed such that corresponding two of the shoulder axial grooves 20 located on both sides in the tire circumferential direction of the shoulder block 23 are connected to each other. The circumferential sipe 24 is in communication with, for example, a center region among three regions obtained by trisecting either of the shoulder axial grooves 20 in the length direction thereof. In addition, the circumferential sipe 24 is formed at an angle of not greater than 5° with respect to the tire circumferential direction, and the circumferential sipe 24 in the present embodiment extends so as to be parallel to the tire circumferential direction. Thus, the circumferential sipe 24 is located in a center region among three regions obtained by trisecting the first shoulder land portion 11 in the tire axial direction. Such a circumferential sipe 24 serves to improve cornering performance on an ice/snow road surface.

As shown in FIG. 3, the shoulder block 23 includes an inner block piece 26 and an outer block piece 27 which are delimited by the circumferential sipe 24. The inner block piece 26 is located so as to be closer to the first shoulder circumferential groove 5 (shown in FIG. 2) than the circumferential sipe 24 is. The outer block piece 27 is located so as to be closer to the first tread end T1 than the circumferential sipe 24 is.

Each of the shoulder sipes 30 includes an inner shoulder sipe 31 formed in the inner block piece 26 and an outer shoulder sipe 32 formed in the outer block piece 27. In the present embodiment, the total of a length L3 in the tire axial direction of each one of the inner shoulder sipes 31 and a length L4 in the tire axial direction of the corresponding one of the outer shoulder sipes 32 is not less than 60% of the width W2 of the first shoulder land portion 11.

Each one of the inner block pieces 26 is provided with three to seven inner shoulder sipes 31. The inner shoulder sipes 31 have shapes identical to one another. Each of the inner shoulder sipes 31 has both ends terminating within the inner block piece 26. The length L3 in the tire axial direction of the inner shoulder sipe 31 is 25% to 35% of the width W2 of the first shoulder land portion 11. Such an inner shoulder sipe 31 serves to improve the performance on ice and snow and the steering stability on a dry road surface in a balanced manner.

An angle θ3 of an imaginary line 31v connecting both ends of the inner shoulder sipe 31 to each other with respect to the tire axial direction is, for example, 10 to 20°. Such an inner shoulder sipe 31 enables frictional force to be exerted also in the tire axial direction on an ice/snow road surface.

Each one of the outer block pieces 27 is provided with three to seven outer shoulder sipes 32. A desirable mode is such that, in the present embodiment, the number of the outer shoulder sipes 32 formed in each one of the outer block pieces 27 is equal to the number of the inner shoulder sipes 31 formed in each one of the inner block pieces 26. Consequently, wear progresses evenly between the inner block piece 26 and the outer block piece 27, whereby uneven wear resistance is improved.

An angle θ4 of an imaginary line 32v connecting both ends of each of the outer shoulder sipes 32 to each other with respect to the tire axial direction is, for example, 0 to 10°. Such an outer shoulder sipe 32 serves to improve traction performance on an ice/snow road surface.

The outer shoulder sipe 32 has an end, on the first shoulder circumferential groove 5 side, slightly apart from the circumferential sipe 24 and extends from this end to the outer side in the tire axial direction. Without limitation to such a mode, the outer shoulder sipe 32 may be in communication with the circumferential sipe 24, for example. The length L4 in the tire axial direction of the outer shoulder sipe 32 is 30% to 50% of the width W2 of the first shoulder land portion 11.

The outer shoulder sipes 32 include first outer shoulder sipes 32A and second outer shoulder sipes 32B having different shapes. Each of the first outer shoulder sipes 32A terminates within the outer block piece 27 without reaching the first tread end T1. Each of the second outer shoulder sipes 32B extends to the first tread end T1. In the present embodiment, the first outer shoulder sipes 32A and the second outer shoulder sipes 32B are provided alternately in the tire circumferential direction. Consequently, uneven wear near the first tread end T1 is suppressed.

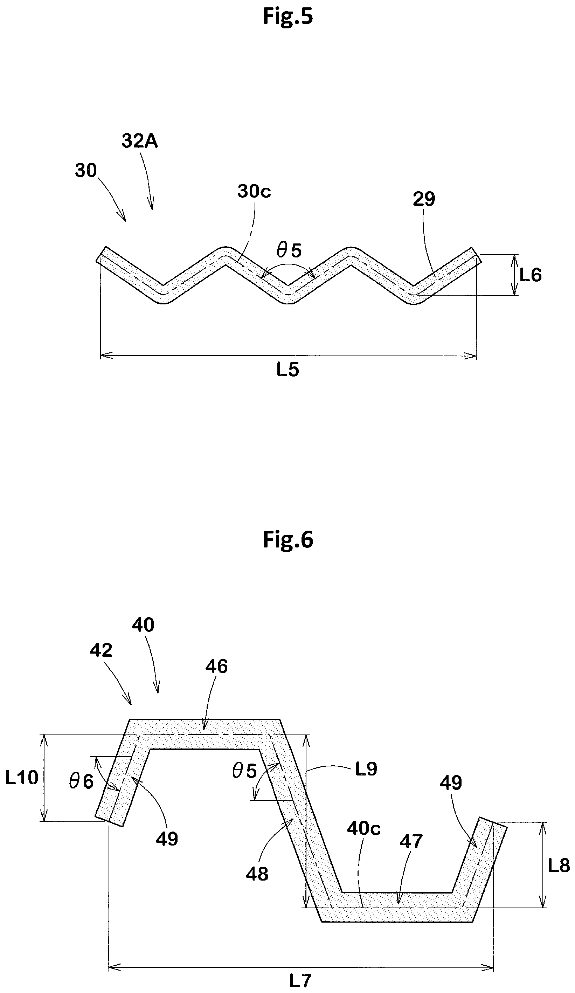

FIG. 5 is an enlarged view of any of the first outer shoulder sipes 32A as an example of a shoulder sipe 30. The opening of the shoulder sipe 30 is dotted in order to make it easy to understand the configuration. As shown in FIG. 5, the shoulder sipe 30 has a bending angle θ5 of 100 to 120°. Such a shoulder sipe 30 can, when the sipe walls thereof facing each other are engaged with each other, assuredly improve the rigidity of the first shoulder land portion 11.

The shoulder sipe 30 has a circumferential edge component and an axial edge component. The axial edge component of the shoulder sipe 30 corresponds to a length L5 in the tire axial direction of the shoulder sipe 30. The circumferential edge component of the shoulder sipe 30 corresponds to the total of lengths L6 in the tire circumferential direction of tilted sipe pieces 29. The length L5 and the lengths L6 are measured along a sipe center line 30c. The shoulder sipe 30 shown in FIG. 5 has six sipe pieces 29 having the lengths L6 in the tire circumferential direction, and thus 6×L6 is the circumferential edge component of this shoulder sipe 30.

As shown in FIG. 2, each of the middle axial grooves 35 linearly extends in the tire axial direction so as to have a fixed groove width W5, for example. The groove width W5 of the middle axial groove 35 is, for example, smaller than the groove width W3 of the inner groove portion 21 of the shoulder axial groove 20. Specifically, the groove width W5 of the middle axial groove 35 is 60% to 80% of the groove width W3 of the inner groove portion 21. Such a middle axial groove 35 can suppress uneven wear of the first middle land portion 13 and improve the steering stability on a dry road surface.

The middle axial groove 35 is formed at an angle of not greater than 10° with respect to the tire axial direction, for example. A desirable mode is such that the middle axial groove 35 in the present embodiment extends so as to be parallel to the tire axial direction. Consequently, the traction performance on an ice/snow road surface is assuredly improved.

The middle axial groove 35 is desirably in communication with the first shoulder circumferential groove 5 at a position different, in the tire circumferential direction, from the position at which any of the shoulder axial grooves 20 is in communication with the first shoulder circumferential groove 5. Specifically, in the plan view of the tread, an imaginary region 20v (dotted in FIG. 2) obtained by extending an end portion on the first shoulder circumferential groove 5 side of the shoulder axial groove 20 parallelly to the tire axial direction does not overlap with an end portion on the first shoulder circumferential groove 5 side of the middle axial groove 35. Consequently, uneven wear near the first shoulder circumferential groove 5 is suppressed.

As shown in FIG. 2 and FIG. 4, each of the plurality of middle blocks 36 is desirably provided with no sipe completely crossing the middle block 36 in the tire circumferential direction. In addition, each of the plurality of middle blocks 36 is desirably provided with no sipe completely crossing the middle block 36 in the tire axial direction. Such a middle block 36 has a high rigidity and can further improve the steering stability on a dry road surface.

As shown in FIG. 4, each one of the middle blocks 36 is provided with, for example, two to five middle sipe groups 38. However, the mode of the present invention is not limited thereto.

Each one of the middle sipe groups 38 is composed of, for example, three to six closed sipes 39. The middle sipe group 38 in the present embodiment is composed of one first middle sipe 41, two second middle sipes 42, and one third middle sipe 43. The first middle sipe 41 is located so as to be closest to the tire equator C (shown in FIG. 1) in the one middle sipe group 38. The third middle sipe 43 is located so as to be closest to the first tread end T1 (shown in FIG. 1) in the one middle sipe group 38. The second middle sipes 42 are located between the first middle sipe 41 and the third middle sipe 43. In the present embodiment, each one of the middle sipe groups 38 is provided with two second middle sipes 42.

FIG. 6 is an enlarged view of either of the second middle sipes 42 as an example of a middle sipe 40. The opening of the middle sipe 40 in FIG. 6 is dotted in order to make it easy to understand the configuration. As shown in FIG. 4 and FIG. 6, each of the middle sipes 40 in the present embodiment includes a first sipe piece 46, a second sipe piece 47, and a third sipe piece 48. Each of the first sipe piece 46 and the second sipe piece 47 extends in the tire axial direction. In addition, the second sipe piece 47 is located so as to be closer to the tire equator C than the first sipe piece 46 is, and is positionally shifted in the tire circumferential direction from the first sipe piece 46. The third sipe piece 48 is located between and contiguous with the first sipe piece 46 and the second sipe piece 47 and has a larger angle with respect to the tire axial direction than the first sipe piece 46 and the second sipe piece 47. The angle θ5 (shown in FIG. 6) of the third sipe piece 48 with respect to the tire axial direction is, for example, 60 to 80°. Such middle sipes 40 enable frictional force to be exerted in many directions and enable improvement of the traction performance and the cornering performance which are exhibited during running on ice and snow.

A tilted piece 49 extending so as to have a larger angle with respect to the tire axial direction than the first sipe piece 46 or the second sipe piece 47 is formed at an end portion of the middle sipe 40. An angle θ6 (shown in FIG. 6) of the tilted piece 49 with respect to the tire axial direction is, for example, 60 to 80° and is, in the present embodiment, approximately equal to the angle θ5 of the third sipe piece 48. Such a tilted piece 49 enables the middle sipe 40 to be inhibited from being excessively opened and enables suppression of uneven wear around the middle sipe 40.

As shown in FIG. 4, in the present embodiment, the first middle sipe 41 has the tilted piece 49 formed at an end portion thereof on the first tread end T1 side and has no tilted piece 49 formed at an end portion thereof on the side opposite to the first tread end T1 side. The second middle sipe 42 has the tilted piece 49 formed at each of end portions thereof on both sides in the tire axial direction. The third middle sipe 43 has the tilted piece 49 formed at an end portion thereof on the tire equator C side and has no tilted piece 49 formed at an end portion thereof on the side opposite to the tire equator C side. Such arrangement of the tilted pieces 49 serves to improve the uneven wear resistance and the performance on ice and snow in a balanced manner.

As shown in FIG. 6, each of the middle sipes 40 has a circumferential edge component and an axial edge component. The axial edge component of the middle sipe 40 corresponds to a length L7 in the tire axial direction of the middle sipe 40. The circumferential edge component of the middle sipe 40 is the total of lengths L8 in the tire circumferential direction of the tilted sipe pieces. The length L7 and the lengths L8 are measured along a sipe center line 40c. In the case of the second middle sipe 42 shown in FIG. 6, the circumferential edge component of the second middle sipe 42 is the sum of a length in the tire circumferential direction of the first sipe piece 46, a length in the tire circumferential direction of the second sipe piece 47, a length L9 in the tire circumferential direction of the third sipe piece 48, and 2×L10 which is the total of lengths L10 in the tire circumferential direction of the tilted pieces 49. The first sipe piece 46 and the second sipe piece 47 in the present embodiment extend so as to be parallel to the tire axial direction, and thus the lengths thereof in the tire circumferential direction are substantially 0.

As shown in FIG. 2, each of the first middle land portion 13 and the first shoulder land portion 11 includes: circumferential edge components corresponding to lengths in the tire circumferential direction of edges formed by the corresponding sipes; and axial edge components corresponding to lengths in the tire axial direction of the edges formed by said sipes. The measurement method for the circumferential edge components and the axial edge components of the respective sipes is as described above. The sum of the circumferential edge components of the sipes in the first middle land portion 13 is desirably 105% to 200% of the sum of the circumferential edge components of the sipes in the first shoulder land portion 11. Consequently, the cornering performance on an ice/snow road surface is improved. The above configuration can be obtained by, for example, appropriately adjusting the bending angles θ5 (shown in FIG. 5) of the shoulder sipes 30.

The sum of the axial edge components of the sipes in the first middle land portion 13 is 50% to 95% of the sum of the axial edge components of the sipes in the first shoulder land portion 11. Consequently, the rigidity of the first middle land portion 13 is maintained, and the steering stability on a dry road surface is improved.

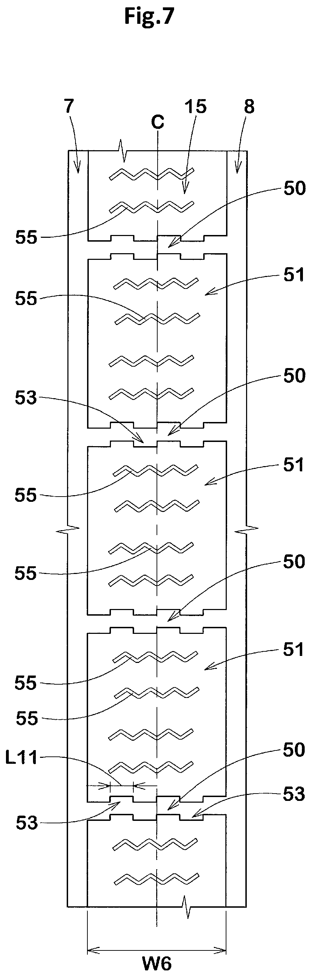

FIG. 7 is an enlarged view of the crown land portion 15. As shown in FIG. 7, the crown land portion 15 includes a plurality of crown blocks 51 delimited by a plurality of crown axial grooves 50. Each of the crown axial grooves 50 completely crosses the crown land portion 15 in the tire axial direction and extends from the first crown circumferential groove 7 to the second crown circumferential groove 8.

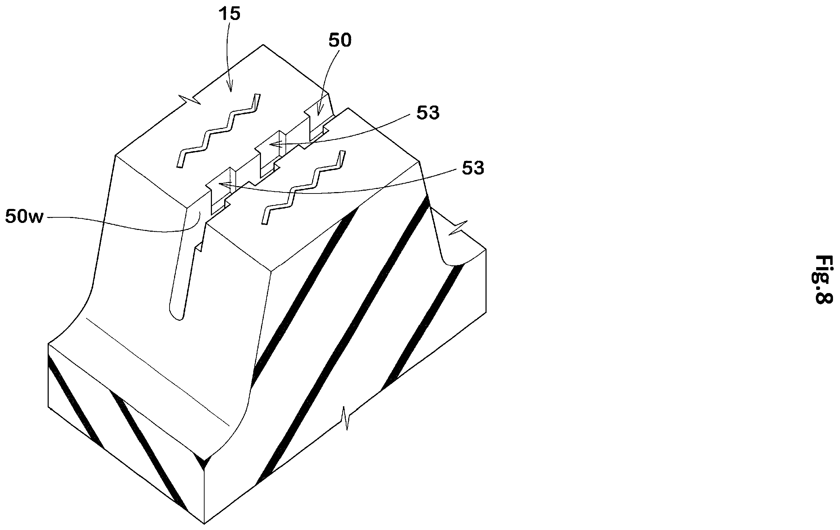

FIG. 8 is an enlarged perspective view of any of the crown axial grooves 50. As shown in FIG. 8, at least one of groove walls 50w of the crown axial groove 50 includes a plurality of recesses 53 obtained by locally recessing the groove wall 50w. In the present embodiment, each of both groove walls 50w of the crown axial groove 50 includes the recesses 53. In addition, each of the plurality of recesses 53 is opened in a ground-contact surface of the crown land portion 15. Such a recess 53 serves to improve the performance on ice and snow.

As shown in FIG. 7, in the present embodiment, the recesses 53 provided in each one of the groove walls of the crown axial groove 50 and the recesses 53 provided in the other groove wall of the crown axial groove 50 are positionally shifted from each other in the length direction of the crown axial groove 50.

An opening length L11 in the tire axial direction of one of the recesses 53 is, for example, not greater than 5.0 mm and is desirably 10% to 25% of a width W6 in the tire axial direction of the crown land portion 15. The maximum depth of the recess 53 is 40% to 60% of the maximum depth of the crown axial groove 50. Such a recess 53 improves the performance on ice and snow and the steering stability on a dry road surface in a balanced manner.

Each of the plurality of crown blocks 51 is provided with no sipe completely crossing the crown block in the tire axial direction. Moreover, each of the plurality of crown blocks 51 is provided with no sipe completely crossing the crown block 51 in the tire circumferential direction. The crown block 51 in the present embodiment is provided with a plurality of crown sipes 55 each having both ends terminating within the crown block 51. Such crown sipes 55 make it possible to exert frictional force on an ice/snow road surface while maintaining the rigidity of the crown block 51.

The crown sipes 55 extend in the tire axial direction in a zigzag manner, for example. In addition, each one of the crown blocks 51 is provided with, for example, two to six crown sipes 55. Consequently, it is possible to improve the performance on ice and snow while suppressing uneven wear of the crown block 51.

A tread rubber composing the tread portion 2 shown in FIG. 1 has a complex elastic modulus E*, at 0°C, of 5.0 to 9.0 MPa. Consequently, the performance on ice and snow and the steering stability are improved in a balanced manner. The complex elastic modulus E* is a value measured according to the standards of JIS-K 6394 under the following conditions using a viscoelasticity spectrometer.
Initial strain: 10%
Amplitude: ±2%
Frequency: 10 Hz
Deformation mode: tension
Measurement temperature: 0°C

## Claims

1. A tire (1) having a tread portion (2), the tread portion (2) comprising:
a first tread end (T1) and a second tread end (T2);
a plurality of circumferential grooves (3), between the first tread end (T1) and the second tread end (T2), continuously extending in a tire circumferential direction; and
a plurality of land portions (4) delimited by the plurality of circumferential grooves (3), wherein
the plurality of circumferential grooves (3) include a first shoulder circumferential groove (5) located so as to be closest to the first tread end (T1),
the plurality of land portions (4) include
a first shoulder land portion (11) including the first tread end (T1) and
a first middle land portion (13) adjacent to the first shoulder land portion (11) with the first shoulder circumferential groove (5) interposed therebetween,
the first shoulder land portion (11) is provided with a plurality of shoulder sipes (30) extending in a tire axial direction in a zigzag manner,
each of the plurality of shoulder sipes (30) has a length not less than 60% of a width (W2) in the tire axial direction of the first shoulder land portion (11), i.e. in a case where two or more shoulder sipes (30) are arranged in the tire axial direction, the total of the length in the tire axial direction of one of the shoulder sipes (30) and the length in the tire axial direction of the other shoulder sipe(s) (30) is not less than 60% of the width (W2) of the first shoulder land portion (11),
the first middle land portion (13) is provided with a plurality of middle sipe groups (38) arranged in the tire circumferential direction, and
each of the middle sipe groups (38) is formed such that a plurality of closed sipes (39) thereof overlap with each other in both the tire axial direction and the tire circumferential direction, and wherein
the first shoulder land portion (11) includes a plurality of shoulder blocks (23) delimited by a plurality of shoulder axial grooves (20) extending from the first shoulder circumferential groove (5) to at least the first tread end (T1), and
each of the plurality of shoulder blocks (23) is provided with at least one circumferential sipe (24) connecting corresponding ones of the plurality of shoulder axial grooves (20) to each other.

2. The tire (1) according to claim 1, wherein
the first middle land portion (13) includes a plurality of middle blocks (36) delimited by a plurality of middle axial grooves (35) completely crossing the first middle land portion (13) in the tire axial direction, and
each of the plurality of middle blocks (36) is provided with no sipe completely crossing the middle block (36) in the tire circumferential direction.

3. The tire (1) according to claim 2, wherein
each of the plurality of middle blocks (36) is provided with no sipe completely crossing the middle block (36) in the tire axial direction.

4. The tire (1) according to one of claims 1 to 3, wherein
each of the first middle land portion (13) and the first shoulder land portion (11) includes circumferential edge components corresponding to lengths in the tire circumferential direction of edges formed by the corresponding sipes, and
a sum of the circumferential edge components in the first middle land portion (13) is 105% to 200% of a sum of the circumferential edge components in the first shoulder land portion (11).

5. The tire (1) according to one of claims 1 to 4, wherein
each of the first middle land portion (13) and the first shoulder land portion (11) includes axial edge components corresponding to lengths in the tire axial direction of edges formed by the corresponding sipes, and
a sum of the axial edge components in the first middle land portion (13) is 50% to 95% of a sum of the axial edge components in the first shoulder land portion (11).

6. The tire (1) according to one of claims 1 to 5, wherein
each of the plurality of closed sipes (39) includes: a first sipe piece (46) extending along the tire axial direction on the first tread end (T1) side; a second sipe piece (47) extending along the tire axial direction on the second tread end (T2) side and positionally shifted in the tire circumferential direction from the first sipe piece (46); and a third sipe piece (48) contiguous with the first sipe piece (46) and the second sipe piece (47) and extending so as to have a larger angle (θ5) with respect to the tire axial direction than the first sipe piece (46) and the second sipe piece (47).

7. The tire (1) according to one of claims 1 to 6, wherein
the plurality of circumferential grooves (3) include a first crown circumferential groove (7) located between the first shoulder circumferential groove (5) and a tire equator (C),
the plurality of land portions (4) include a crown land portion (15) adjacent to the first middle land portion (13) with the first crown circumferential groove (7) interposed therebetween, and
the crown land portion (15) includes a plurality of crown blocks (51) delimited by a plurality of crown axial grooves (50) completely crossing the crown land portion (15) in the tire axial direction.

8. The tire (1) according to claim 7, wherein
each of the plurality of crown blocks (51) is provided with no sipe completely crossing the crown block (51) in the tire axial direction.

9. The tire (1) according to claim 7 or claim 8, wherein
at least one of groove walls (50w) of each of the crown axial grooves (50) includes a plurality of recesses (53) obtained by locally recessing the groove wall (50w), and
each of the plurality of recesses (53) is opened in a ground-contact surface of the crown land portion (15).

## Patentansprüche

1. Reifen (1) mit einem Laufflächenabschnitt (2), wobei der Laufflächenabschnitt (2) umfasst:
ein erstes Laufflächenende (T1) und ein zweites Laufflächenende (T2);
eine Vielzahl von Umfangsrillen (3) zwischen dem ersten Laufflächenende (T1) und dem zweiten Laufflächenende (T2), die sich kontinuierlich in einer Reifenumfangsrichtung erstrecken; und
eine Vielzahl von Landabschnitten (4), die durch die Vielzahl von Umfangsrillen (3) begrenzt sind, wobei
die Vielzahl von Umfangsrillen (3) eine erste Schulterumfangsrille (5) umfasst, die so angeordnet ist, dass sie dem ersten Laufflächenende (T1) am nächsten ist,
die Vielzahl von Landabschnitten (4) umfasst
einen ersten Schulterlandabschnitt (11), der das erste Laufflächenende (T1) umfasst, und
einen ersten mittleren Landabschnitt (13), der benachbart zu dem ersten Schulterlandabschnitt (11) ist, wobei die erste Schulterumfangsrille (5) dazwischen angeordnet ist,
der erste Schulterlandabschnitt (11) mit einer Vielzahl von Schulterfeinschnitten (30) versehen ist, die sich in einer Reifenaxialrichtung zickzackförmig erstrecken,
jeder der Vielzahl von Schulterfeinschnitten (30) eine Länge von nicht weniger als 60 % einer Breite (W2) in der Reifenaxialrichtung des ersten Schulterlandabschnitts (11) aufweist, d. h. in einem Fall, in dem zwei oder mehr Schulterfeinschnitte (30) in der Reifenaxialrichtung angeordnet sind, die Summe der Länge in der Reifenaxialrichtung von einem der Schulterfeinschnitte (30) und der Länge in der Reifenaxialrichtung des anderen Schulterfeinschnitts / der anderen Schulterfeinschnitte (30) nicht weniger als 60 % der Breite (W2) des ersten Schulterlandabschnitts (11) beträgt,
der erste mittlere Landabschnitt (13) mit einer Vielzahl von mittleren Feinschnittgruppen (38) versehen ist, die in der Reifenumfangsrichtung angeordnet sind, und
jede der mittleren Feinschnittgruppen (38) so ausgebildet ist, dass sich eine Vielzahl von geschlossenen Feinschnitten (39) davon sowohl in der Reifenaxialrichtung als auch in der Reifenumfangsrichtung überlappen, und wobei
der erste Schulterlandabschnitt (11) eine Vielzahl von Schulterblöcken (23) umfasst, die durch eine Vielzahl von Schulteraxialrillen (20) begrenzt sind, die sich von der ersten Schulterumfangsrille (5) zu mindestens dem ersten Laufflächenende (T1) erstrecken, und
jeder der Vielzahl von Schulterblöcken (23) mit mindestens einem Umfangsfeinschnitt (24) versehen ist, der entsprechende der Vielzahl von Schulteraxialrillen (20) miteinander verbindet.

2. Reifen (1) nach Anspruch 1, wobei
der erste mittlere Landabschnitt (13) eine Vielzahl von mittleren Blöcken (36) umfasst, die durch eine Vielzahl von mittleren Axialrillen (35) begrenzt sind, die den ersten mittleren Landabschnitt (13) in der Reifenaxialrichtung vollständig kreuzen, und
jeder der Vielzahl von mittleren Blöcken (36) mit keinem Feinschnitt versehen ist, der den mittleren Block (36) in der Reifenumfangsrichtung vollständig kreuzt.

3. Reifen (1) nach Anspruch 2, wobei
jeder der Vielzahl von mittleren Blöcken (36) mit keinem Feinschnitt versehen ist, der den mittleren Block (36) in der Reifenaxialrichtung vollständig kreuzt.

4. Reifen (1) nach einem der Ansprüche 1 bis 3, wobei
jeder des ersten mittleren Landabschnitts (13) und des ersten Schulterlandabschnitts (11) Umfangskantenkomponenten umfasst, die Längen in der Reifenumfangsrichtung von Kanten entsprechen, die durch die entsprechenden Feinschnitte gebildet sind, und
eine Summe der Umfangskantenkomponenten in dem ersten mittleren Landabschnitt (13) 105 % bis 200 % einer Summe der Umfangskantenkomponenten in dem ersten Schulterlandabschnitt (11) beträgt.

5. Reifen (1) nach einem der Ansprüche 1 bis 4, wobei
jeder des ersten mittleren Landabschnitts (13) und des ersten Schulterlandabschnitts (11) Axialkantenkomponenten umfasst, die Längen in der Reifenaxialrichtung von Kanten entsprechen, die durch die entsprechenden Feinschnitte gebildet sind, und
eine Summe der Axialkantenkomponenten in dem ersten mittleren Landabschnitt (13) 50 % bis 95 % einer Summe der Axialkantenkomponenten in dem ersten Schulterlandabschnitt (11) beträgt.

6. Reifen (1) nach einem der Ansprüche 1 bis 5, wobei
jeder der Vielzahl von geschlossenen Feinschnitten (39) umfasst: ein erstes Feinschnittstück (46), das sich entlang der Reifenaxialrichtung auf der Seite des ersten Laufflächenendes (T1) erstreckt; ein zweites Feinschnittstück (47), das sich entlang der Reifenaxialrichtung auf der Seite des zweiten Laufflächenendes (T2) erstreckt und in der Reifenumfangsrichtung von dem ersten Feinschnittstück (46) positionell verschoben ist; und ein drittes Feinschnittstück (48), das an das erste Feinschnittstück (46) und das zweite Feinschnittstück (47) angrenzt und sich so erstreckt, dass es einen größeren Winkel (θ5) in Bezug auf die Reifenaxialrichtung aufweist als das erste Feinschnittstück (46) und das zweite Feinschnittstück (47).

7. Reifen (1) nach einem der Ansprüche 1 bis 6, wobei
die Vielzahl von Umfangsrillen (3) eine erste Kronenumfangsrille (7) umfasst, die zwischen der ersten Schulterumfangsrille (5) und einem Reifenäquator (C) angeordnet ist,
die Vielzahl von Landabschnitten (4) einen Kronenlandabschnitt (15) umfasst, der benachbart zu dem ersten mittleren Landabschnitt (13) ist, wobei die erste Kronenumfangsrille (7) dazwischen angeordnet ist, und
der Kronenlandabschnitt (15) eine Vielzahl von Kronenblöcken (51) umfasst, die durch eine Vielzahl von Kronenaxialrillen (50) begrenzt sind, die den Kronenlandabschnitt (15) in der Reifenaxialrichtung vollständig kreuzen.

8. Reifen (1) nach Anspruch 7, wobei
jeder der Vielzahl von Kronenblöcken (51) mit keinem Feinschnitt versehen ist, der den Kronenblock (51) in der Reifenaxialrichtung vollständig kreuzt.

9. Reifen (1) nach Anspruch 7 oder Anspruch 8, wobei
mindestens eine der Rillenwände (50w) jeder der Kronenaxialrillen (50) eine Vielzahl von durch lokales Vertiefen der Rillenwand (50w) erhaltenen Vertiefungen (53) umfasst, und
jede der Vielzahl von Vertiefungen (53) in einer Bodenkontaktfläche des Kronenlandabschnitts (15) geöffnet ist.

## Revendications

1. Pneumatique (1) ayant une portion formant bande de roulement (2), la portion formant bande de roulement (2) comprenant :
une première extrémité de bande de roulement (T1) et une seconde extrémité de bande de roulement (T2) ;
une pluralité de rainures circonférentielles (3), entre la première extrémité de bande de roulement (T1) et la seconde extrémité de bande de roulement (T2), s'étendant en continu dans une direction circonférentielle du pneumatique ; et
une pluralité de portions en relief (4) délimitées par la pluralité de rainures circonférentielles (3), dans lequel
la pluralité de rainures circonférentielles (3) incluent une première rainure circonférentielle d'épaulement (5) située de façon à être la plus proche de la première extrémité de bande de roulement (T1),
la pluralité de portions en relief (4) incluent
une première portion en relief d'épaulement (11) incluant la première extrémité de bande de roulement (T1) et
une première portion en relief médiane (13) adjacente à la première portion en relief d'épaulement (11), la première rainure circonférentielle d'épaulement (5) étant interposée entre celles-ci,
la première portion en relief d'épaulement (11) est dotée d'une pluralité de fentes d'épaulement (30) s'étendant en zigzag dans la direction axiale du pneumatique,
chacune de la pluralité de fentes d'épaulement (30) a une longueur qui n'est pas inférieure à 60 % d'une largeur (W2) dans la direction axiale du pneumatique de la première portion en relief d'épaulement (11), c'est-à-dire que dans un cas où deux ou plusieurs fentes d'épaulement (30) sont agencées dans la direction axiale du pneumatique, le total de la longueur dans la direction axiale du pneumatique de l'une des fentes d'épaulement (30) et de la longueur dans la direction axiale du pneumatique de l'autre ou des autres fentes d'épaulement (30) n'est pas inférieur à 60 % de la largeur (W2) de la première portion en relief d'épaulement (11),
la première portion en relief médiane (13) est dotée d'une pluralité de groupes de fentes médianes (38) agencés dans la direction circonférentielle du pneumatique, et
chacun des groupes de fentes médianes (38) est formé de telle sorte qu'une pluralité de fentes fermées (39) de celles-ci sont en chevauchement les unes avec les autres à la fois dans la direction axiale du pneumatique et dans la direction circonférentielle du pneumatique, et dans lequel
la première portion en relief d'épaulement (11) inclut une pluralité de blocs d'épaulement (23) délimités par une pluralité de rainures axiales d'épaulement (20) s'étendant depuis la première rainure circonférentielle d'épaulement (5) jusqu'à au moins la première extrémité de bande de roulement (T1), et
chacun de la pluralité de blocs d'épaulement (23) est doté d'au moins une fente circonférentielle (24) connectant des rainures correspondantes de la pluralité de rainures axiales d'épaulement (20) les unes aux autres.

2. Pneumatique (1) selon la revendication 1, dans lequel
la première portion en relief médiane (13) inclut une pluralité de blocs médians (36) délimités par une pluralité de rainures axiales médianes (35) traversant complètement la première portion en relief médiane (13) dans la direction axiale du pneumatique, et
chacun de la pluralité de blocs médians (36) n'est doté d'aucune fente traversant complètement le bloc médian (36) dans la direction circonférentielle du pneumatique.

3. Pneumatique (1) selon la revendication 2, dans lequel
chacun de la pluralité de blocs médians (36) n'est doté d'aucune fente traversant complètement le bloc médian (36) dans la direction axiale du pneumatique.

4. Pneumatique (1) selon l'une des revendications 1 à 3, dans lequel
chacune de la première portion en relief médiane (13) et de la première portion en relief d'épaulement (11) inclut des composants de bords circonférentiels correspondant à des longueurs dans la direction circonférentielle du pneumatique de bords formés par les fentes correspondantes, et
une somme des composants de bords circonférentiels dans la première portion en relief médiane (13) est de 105 % à 200 % d'une somme des composants de bords circonférentiels dans la première portion en relief d'épaulement (11).

5. Pneumatique (1) selon l'une des revendications 1 à 4, dans lequel
chacune de la première portion en relief médiane (13) et de la première portion en relief d'épaulement (11) inclut des composants de bords axiaux correspondant à des longueurs dans la direction axiale du pneumatique de bords formés par les fentes correspondantes, et
une somme des composants de bords axiaux dans la première portion en relief médiane (13) est de 50 % à 95 % d'une somme des composants de bords axiaux dans la première portion en relief d'épaulement (11).

6. Pneumatique (1) selon l'une des revendications 1 à 5, dans lequel
chacune de la pluralité de fentes fermées (39) inclut : un premier élément de fente (46) s'étendant le long de la direction axiale du pneumatique sur le côté de la première extrémité de bande de roulement (T1) ; un deuxième élément de fente (47) s'étendant le long de la direction axiale du pneumatique sur le côté de la seconde extrémité de bande de roulement (T2) et décalé en position dans la direction circonférentielle du pneumatique par rapport au premier élément de fente (46) ; et un troisième élément de fente (48) contigu au premier élément de fente (46) et au deuxième élément de fente (47) et s'étendant de façon à avoir un angle (θ5) supérieur, par rapport à la direction axiale du pneumatique, à celui du premier élément de fente (46) et du deuxième élément de fente (47).

7. Pneumatique (1) selon l'une des revendications 1 à 6, dans lequel
la pluralité de rainures circonférentielles (3) incluent une première rainure circonférentielle de couronne (7) située entre la première rainure circonférentielle d'épaulement (5) et un équateur de pneumatique (C),
la pluralité de portions en relief (4) incluent une portion en relief de couronne (15) adjacente à la première portion en relief médiane (13), la première rainure circonférentielle de couronne (7) étant interposée entre celles-ci, et
la portion en relief de couronne (15) inclut une pluralité de blocs de couronne (51) délimités par une pluralité de rainures axiales de couronne (50) traversant complètement la portion en relief de couronne (15) dans la direction axiale du pneumatique.

8. Pneumatique (1) selon la revendication 7, dans lequel
chacun de la pluralité de blocs de couronne (51) n'est doté d'aucune fente traversant complètement le bloc de couronne (51) dans la direction axiale du pneumatique.

9. Pneumatique (1) selon la revendication 7 ou 8, dans lequel
l'une au moins de parois de rainure (50w) de chacune des rainures axiales de couronne (50) inclut une pluralité d'évidements (53) obtenus en évidant localement la paroi de rainure (50w), et
chacun de la pluralité d'évidements (53) est ouvert dans une surface de contact au sol de la portion en relief de couronne (15).
